# EUROPÄISCHE PATENTSCHRIFT

(11) **EP 0 418 530 B1**
(45) Veröffentlichungstag und Bekanntmachung des Hinweises auf die Patenterteilung: **16.03.1994**
(21) Anmeldenummer: 90115051.6
(22) Anmeldetag: 06.08.1990
(51) Int. Cl.: H02K 3/50

(54) **Vorrichtung zur Fixierung der Windungsenden einer Statorwicklung in einer dynamoelektrischen Maschine**
Fastening device of the winding ends of a stator winding in a dynamo-electric machine
Dispositif de fixation des spires terminales d'un enroulement statorique dans une machine dynamo-électrique

(30) Priorität: 20.09.1989 CH 3426/89
(43) Veröffentlichungstag der Anmeldung: 27.03.1991
(73) Patentinhaber: ASEA BROWN BOVERI AG, 5400 Baden (CH)
(72) Erfinder: Hediger, Daniel, CH-5504 Othmarsingen (CH); Stankowski, Hans-Werner, CH-5432 Neuenhof (CH)

(56) Entgegenhaltungen:
- CH-A- 161 939
- DE-C- 540 785
- FR-A- 1 408 666
- FR-A- 2 320 653
- FR-A- 2 329 094

## Beschreibung

### TECHNISCHES GEBIET

Die Erfindung bezieht sich auf eine Vorrichtung zur Halterung der Windungsenden einer Statorwicklung in einer dynamolelektrischen Maschine, in der die Windungsenden innere und äussere Lagen aufweisen, die am axial aussenliegenden Ende miteinander mechanisch und elektrisch verbunden sind, bestehend aus einem Aussenring und einem Innenring, Mitteln zur Verbindung der beiden Ringe miteinander, Mitteln zur Verspannung der beiden Ringe und der besagten Wicklungsenden, wobei in Wickelkopfumfangsrichtung zwischen zwei benachbarten Windungsenden Füllstücke eingelegt sind, von denen wenigstens einige mit den beiden Ringen in radialer Richtung verspannt sind.

Die Erfindung nimmt dabei Bezug auf einen Stand der Technik, wie er sich beispielsweise aus der FR-A-2 329 094 ergibt.

### TECHNOLOGISCHER HINTERGRUND UND STAND DER TECHNIK

Die Befestigung der Wicklungsenden der Statorwicklungen (Wickelkopf) von Turbogeneratoren stellt infolge der grossen Anforderungen, welchen diesen Wickelköpfen unterworfen sind, gewisse Probleme. Diese Anforderungen beruhen auf elektromagnetischen Kraftwirkungen, insbesondere bei Kurzschluss, auf Schwingungserscheinungen und auf unterschiedlichen Wärmedehnungen der Statorstäbe gegenüber dem Statoreisen während des Betriebes.

Bei der Vorrichtung zur Halterung der Windungsenden einer Statorwicklung in einer elektrischen Maschine nach der DE-OS 16 13 125 schmiegt sich ein Aussenring von aussen an einen Teil der äusseren Lagen der Windungsenden an. Ein Innenring, der unabhängig vom Aussenring ist, greift an die inneren Lagen der Windungsenden an. Um die gegenseitige axiale Verschiebung der beiden Ringe zu unterbinden, sind als C-förmige Bügel ausgebildete Vorrichtungen , welche die Windungsenden umgreifen, zur Verbindung der beiden Bügel vorgesehen. Die beiden Ringe sind mit axial verlaufenden Halterungen verschraubt, die ihrerseits an der Stirnseite des Statorblechkörpers befestigt sind.

Bei der axial beweglichen und radial fixierten Wickelkopfhalterung für die Statorwicklung eines Turbogenerators nach der DE-AS 14 63 796 sind die Wickelköpfe mittels Keilen und Zwischenstücken distanziert und zwischen zwei konzentrischen Isolierringen festgehalten. Dabei ist der äussere Isolierring gegenüber Gehäuseteile in radialer Richtung über Gleitkeile, die bei Wärmedehnung des Wickelkopfes eine axiale Verschiebung des äusseren Isolieringes gestatten, festgelegt und mit dem Statorgehäuse über elastische Teile verbunden.

Auch die Wickelkopfhalterung nach der FR-A-2 329 094 verwendet zwei Ringe, einen Innenring und einen Aussenring, zwischen denen die Wicklungsenden eingespannt sind. In Wickelkopfumfangsrichtung sind zwischen zwei benachbarte Windungsenden keilförmige Füllstücke eingelegt, die in radialer Richtung mittels Schraubbolzen verspannt sind. Einige der Schraubbolzen sind verlängert und dienen auch dem Zusammenhalt der beiden Ringe. Diese Befestigungstechnik ist vergleichsweise aufwendig und teuer, weil sie eine grosse Zahl von Schraubbolzen aus unmagnetischem Material erfordert, welche darüber hinaus die schwingfähige Masse des Wickelkopfes erhöhen.

Die Wickelkopfhalterung nach der US-PS 48 00 314 entspricht im grossen und ganzen derjenigen nach der DE-AS 14 63 796, verwendet jedoch nur einen Aussenring. Die Wickelkopfenden sind gruppenweise unter sich verkeilt und verklebt und an diesen Aussenring mittels Bändern angebunden.

### KURZE DARSTELLUNG DER ERFINDUNG

Ausgehend vom Stand der Technik liegt der Erfindung die Aufgabe zugrunde, eine Halterung der eingang genannten Gattung zu schaffen, die wirtschaftlich und einfach herstellbar ist, allen Betriebsbeanspruchungen der genannten Art zuverlässig standhalt und darüber hinaus nicht nur das Nachspannen der Abstützung, sondern auch eine praktisch zerstörungsfreie Demontage ermöglicht.

Diese Aufgabe wird erfindungsgemäss dadurch gelöst, dass Mittel zur Befestigung des äusseren Ringes an der Stirnseite des Statorblechkörpers vorgesehen sind und dass wenigstens einige Füllstücke mit den beiden Ringen in radialer Richtung mittels nachstellbaren Keilen verkeilt sind.

Der Vorteil der Erfindung ist insbesondere darin zu sehen, dass der gesamte Wickelkopf ein bis an sein Ende in sich starres Gebilde bildet. Die Verspannkräfte wirken nicht unnmittelbar auf die vergleichsweise empfindlichen schaltverbindungen zwischen den inneren und äusseren Windungslagen. Darüber hinaus ist der Platzbedarf sehr klein, weil er nur durch den Aussendurchmesser des äusseren Rings bzw. den Innendurchmesser des inneren Ringes bestimmt ist. Ein weiterer Vorteil ist die gute Zugänglichkeit der Verspannung und die Möglichkeit, die gesamte Halterung ohne grossen Aufwand nachzuspannen oder sie zu demontieren.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: ein Ausführungsbeispiel der Erfindung in Gestalt eines vereinfachten Längsschnitts durch die Endpartie eines Turbogenerators;
- Fig.2: einen Ausschnitt einer Ansicht des wickelkopfs der Maschine nach Fig. 1, aus welcher die federnde Aufhängung des Wickelkopfs am statorblechkörper ersichtlich ist;
- Fig.3: einen Ausschnitt einer Ansicht auf die beiden Ringe mit dazwischenliegenden Leiterstäben;
- Fig.4: ein erstes Ausführungsbeispiel einer von aussen zugänglichen Verkeilung;
- Fig.5: ein zweites Ausführungsbeispiel einer von aussen zugänglichen Verkeilung;
- Fig. 6: ein drittes Ausführungsbeispiel einer von aussen zugänglichen Verkeilung;
- Fig. 7: ein viertes Ausführungsbeispiel einer von aussen zugänglichen Verkeilung.

### WEGE ZUR AUSFÜHRUNG DER ERFINDUNG

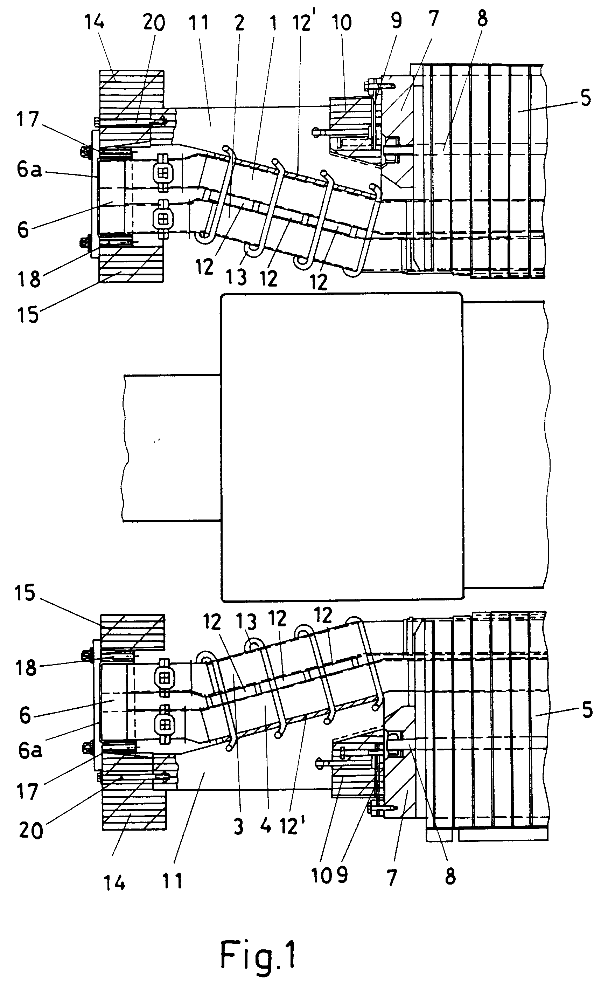

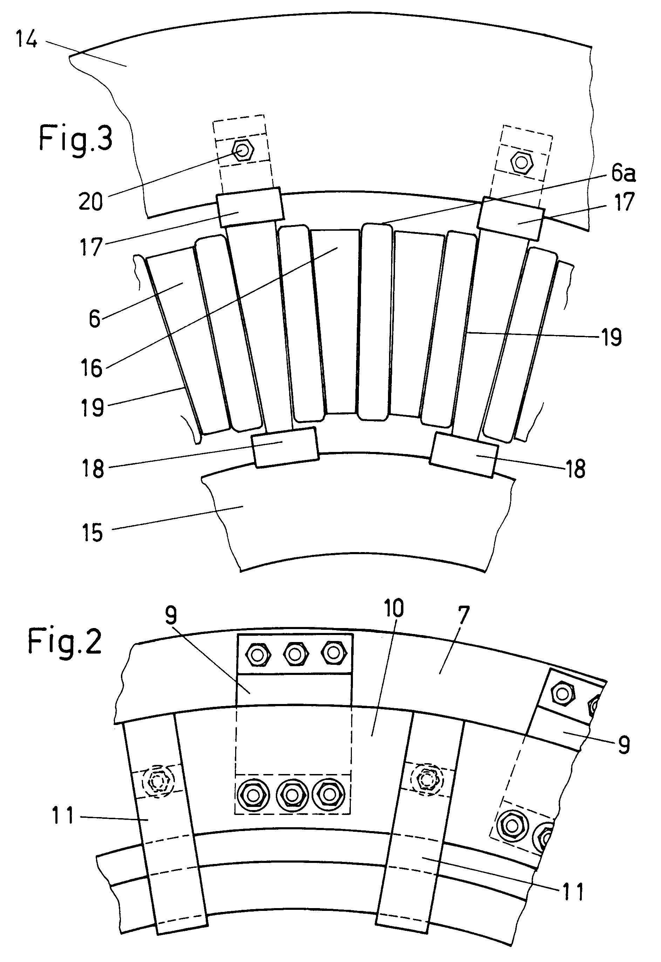

In Fig. 1 sind je zwei Leiterstäbe 1, 2 bzw. 3, 4 einer Statorwicklung dargestellt, welche in ein und derselben Nut eines Statorblechkörpers 5 liegen. An den Enden sind die Stäbe 1 und 2 bzw. 3 und 4 je durch eine metallische Platte 6 mechanisch und elektrisch miteinander verbunden und durch Kappen 6a aus Isoliermaterial elektrisch isoliert. Der Statorblechkörper 5 ist in bekannter Weise mittels Statorpressplatte 7 und Zugbolzen 8 axial verspannt.An der Statorpressplatte 8 sind in Umfangrichtung gleichmässig verteilt radial nach innen gerichtete Blattfedern 9 befestigt, welche an einem Tragring 10 angreifen. An diesem Tragring 10 wiederum sind axial gerichtete Traversen 11 aus glasfaserverstärktem Kunststoff angeschraubt, deren Innenkontur in etwa der Aussenkontur des Wickelkopfs folgt (vgl. Detailansicht gemäss Fig. 2). Unter Zwischenschaltung von Distanzstücken 12, 12′ zwischen den übereinanderliegenden Leiterstäben 1,2 bzw. 3,4 und zwischen den äusseren Leiterstäben 1 bzw. 4 und den Traversen 11 sind die Leiterstäbe an den Traversen 11 mittels kunstharzgetränkter Glasfaserkordeln 13 befestigt. Die Aufhängung des Wickelkopfes an den Blattferdern 9 erlaubt axiale Relativbewegungen zwischen der Statorwicklung und dem Statorblechkörper. Insoweit entspricht der geschilderte Aufbau des Turbogenerators dem Stand der Technik.

Erfindungsgemäss sind nun die äusserste Enden der Leiterstabe 1,..,4 Statorwickelkopfes zwischen einem äusseren Ring 14 aus glasfaserverstärktem Kunststoff, der mittels Bolzen 20 an den Traversen befestigt ist, und einem inneren Ring 15 aus dem selben Material mittelbar verkeilt, wobei der innere Ring 15 auf noch zu beschreibende Art und Weise am äusseren Ring 14 befestigt ist. Dies wird anhand der Fig.2 bis 6 noch näher erläutert.

In dieser vereinfachten Teilansicht auf die Stirnseite des Wickelkopfes sind jeweils zwischen zwei benachbarten, durch die Platten 6 verbundenen Leiterstabenden im Querschnitt etwa trapezförmige Füllstücke 16 aus eingelegt. Diese bestehen aus glasfaserverstärktem Kunstharz oder einem anderen Isoliermaterial mit entsprechender mechanischer Festigkeit. Diese füllen den Raum zwischen zwei benachbarten Leiterenden 6 in Umfangsrichtung im wesentlichen vollständig aus. In radialer Richtung hingegen sind im Beispielsfall zwischen jedem dritten Füllstück 16 und dem inneren Ring 15 bzw. dem äusseren Ring 14 von aussen nachspannbare Keile 17 bzw. 18 eingelegt, die im einzelnen noch näher beschrieben werden. Zur Fixierung der Leiterstabenden und der Füllstücke 16 in Umfangsrichtung sind jeweils elastische Vliese, z. B. Glasfaservliese 19, eingelegt, die nach erfolgter Verkeilung mit Kunstharz getränkt werden (können).

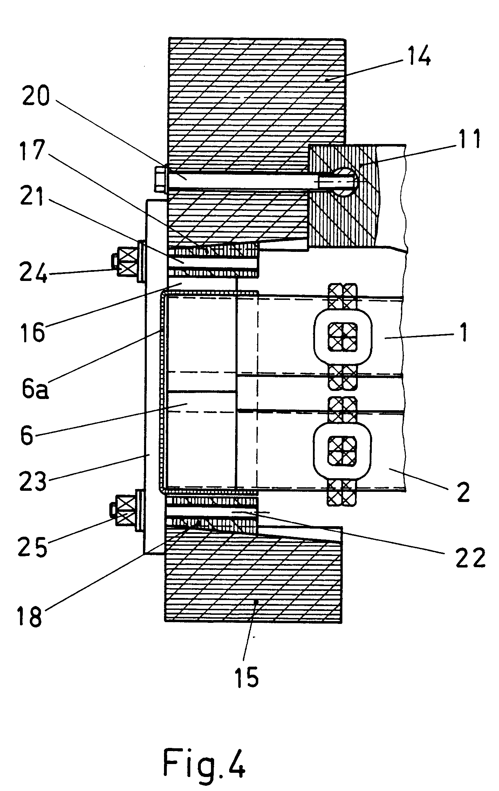

Für die Verkeilung stehen eine Reihe von Möglichkeiten zur Verfügung, von denen die derzeit technisch sinnvoll erscheinenden in den Figuren 4 bis 8 detailliert dargestellt sind.

In der Ausführungsform nach Fig.4 sind die einander zugewandten Flächen der Ringe 14 und 15 abgeschrägt, so dass der Raum zwischen den beiden Ringen sich zum statorblechkörper hin konisch erweitert. Diese Flächen bilden die Keilflächen, welche mit den Keilflächen der Keile 17 und 18 zusammenwirken. Die gegenüberliegenden Flächen der Keile 17 und 18 verlaufen annähernd achsparallel und liegen an dem Füllstück 16 an. Die Keile 17 und 18 sind mit einem stehbolzen 21 bzw. 22 versehen. Eine Platte 23 dient als Widerlager für die stehbolzen 21 und 22. Wie aus Fig.4 deutlich erkennbar ist, reichen die Keile auch im gespannten Zustand nicht bis an die Platte 23 heran, um das Nachspannen der Keile durch Nachspannen der Muttern 24, 25 zu ermöglichen. Aus Fig.4 ist ferner ersichtlich, dass nicht die von der Kappe 6a umfassten Leiterstabenden der Stäbe 1 und 2, sondern nur die Füllstücke 16 gegenüber den beiden Ringen 14 und 15 verspannt sind. Die vergleichsweise gegenüber mechanischen Belastungen insbesondere in Radialrichtung empfindlichen Kappen werden nur durch den Gewölbedruck in Umfangrichtung beansprucht.

Beim Verkeilen wird so vorgegangen, dass die. innenliegenden Keile 18 zunächst leicht gespannt werden, dann erst erfolgt das Spannen der äussren Keile 17. Auf diese Weise wird aufgrund der Keilwirkung der im Querschnitt trapezförmigen Füllstücke 16 beim Anziehen der Keile 17 auch eine in Umfangsrichtung wirkenden Kraft auf den Leiterverband und die dazwischenliegenden Füllstücke 16 ausgeübt.

Wegen der Konizität der aufeinander zugewandten Keilflächen der Ringe 14 und 15 und aufgrund der Tatsache, dass die Platte 23 zumindest teilweise auf beiden Ringen 14, 15 aufliegt, ergibt sich eine axiale Fixierung des inneren Ringes 15.

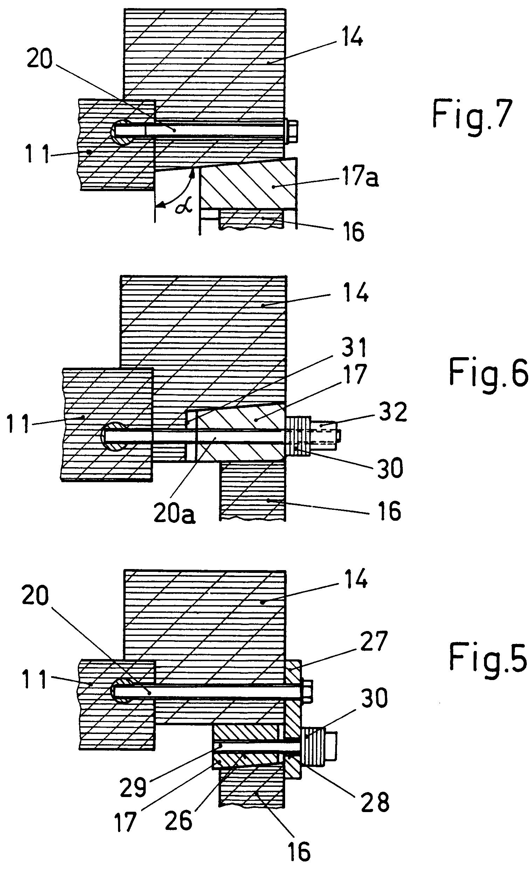

In der Ausführungsform der Ringverkeilung nach Fig. 5 ist der Keil 17 mit einer Gewindebohrung 26 versehen. Unter den Befestigungsbolzen 20 des äusseren Ringes an der Traverse 11 ist eine Platte 27 mit befestigt, welche radial nach innen bis über das Füllstück 16 reicht. Durch eine Bohrung 28 in dieser Platte 27 ist eine schraubenbolzen 29 mit einem Tellerfederpaket 30 geführt und in die Gewindebohrung 26 eingeschraubt. Im Gegensatz zur Verspannung nach Fig.4 sind hier die wirksamen Keilflächen am Füllstück 16 und am Keil 17 ausgebildet.

In der Ausführungsform nach Fig.6 liegt der Keil 17 praktisch vollständig in einer ringförmigen Einschneidung 31 an der Innenseite des äusseren Ringes 14. Die Keilflächen sind am äusseren Ring 14 und am Keil 17 ausgebildet. Der Keil 17 weist eine axial verlaufende Bohrung auf, durch welche die als Stehbolzen 20a ausgebildete Befestigung des äusseren Ringes 14 an der Traverse 11 geführt ist. Ein nur auf den Keil 17 wirkendes Tellerfederpaket 30 und eine Mutter dient zum Anziehen und selbsttätigen Nachspannen der Verkeilung im Betrieb.

Die Verkeilung nach Fig.7 bedient sich eines von aussen einschlagbaren Keils 17a. Der Keil 17a kann im Bedarfsfall mit einer üblichen Keilsicherung, die am Ring 14 oder am Füllstück 16 befestigt ist, gesichert werden.

In den Figuren 5 bis 7 wurde lediglich die Verkeilung zwischen dem äusseren Ring 14 und dem Füllstück 16 veranschalicht. Es versteht sich von selbst, dass die Verkeilung zwischen dem inneren Ring 15 und dem Füllstück 16 in entsprechender Weise verwirklicht werden kann, wobei durchaus verschiedene der beschriebenen Verspannungen miteinander kombiniert werden können. Auch kann im Bedarfsfall auf eine gesonderte Verkeilung zwischen den Füllstücken 16 und dem inneren Ring 15 verzichtet werden, wenn entsprechend angepasste Einlagen statt der Keile 18 verwendet werden, da es zur Erzielung des gewünschten Gewölbedrucks im wesentlichen nur auf die Einleitung radial nach innen gerichteter (Keil-) Kräfte ankommt.
Ferner ist bei den Ausführungsformen nach den Figuren 6 und 7 zu beachten, dass Mittel zur Verbindung der beiden Ringe 14 und 15 vorgesehen werden müssen, da im Gegensatz zur Ausführungsform nach Fig.4 hier keine die beiden Ringe übergreifende Platte (Pos. 23 in Fig.4) vorhanden ist. Besagte Mittel bestehen im einfachsten Fall aus einer radial verlaufenden Platte, die mit beiden Ringen 14 und 15 verschraubt ist.
Bei der Variante nach Fig.5 kann das Mittel zur Verbindung der beiden Ringe 14 und 15 als separates Bauteil ausgeführt sein, das mit den beiden Ringen verschraubt ist. Einfacher ist jedoch, die Platte 27 in Figur 7 so zu verlängern, dass sie bis zum (nicht dargestellten) inneren Ring reicht und mit diesem verschraubt ist.

## Patentansprüche

1. Vorrichtung zur Halterung der Windungsenden (1,2,3,4) einer Statorwicklung in einer dynamolelektrischen Maschine, in der die Windungsenden innere (2,3) und äussere Lagen (1,4) aufweisen, die am axial aussenliegenden Ende miteinander mechanisch und elektrisch verbunden sind, bestehend aus einem Aussenring (14) und einem Innenring (15), Mitteln zur Verbindung der beiden Ringe miteinander, Mitteln (16,17,18) zur Verspannung der beiden Ringe (14,15) und der besagten Wicklungsenden, wobei in Wickelkopfumfangsrichtung zwischen zwei benachbarten Windungsenden (1,2) Füllstücke (16) eingelegt sind, von denen wenigstens einige mit den beiden Ringen (14,15) in radialer Richtung verspannt sind, dadurch gekennzeichnet, dass Mittel (9,10,11) zur Befestigung des äusseren Ringes (14) an der Stirnseite des Statorblechkörpers vorgesehen sind und dass wenigstens einige Füllstücke (16) mit den beiden Ringen (14,15) in radialer Richtung mittels nachstellbaren Keilen (17,18) verkeilt sind.

2. Vorrichtung nach Anspruch 1, dadurch gekennzeichnet, dass der äussere Ring (14) an Traversen (11) befestigt ist, welche Traversen (11) an einer Statorpressplatte (7) angeordnet sind.

3. Vorrichtung nach Anspruch 2, dadurch gekennzeichnet, dass die Traversen (11) unter Zwischenschaltung von radial gerichteten Blattfedern (9) am der Statorpressplatte (7) angeordnet sind.

4. Vorrichtung nach einem der Ansprüuche 1 bis 3, dadurch gekennzeichnet, dass die Füllstücke (16) trapezförmigen, sich radial nach innen verjüngenden Querschnitt aufweisen.

5. Vorrichtung nach einem der Ansprüche 1 bis 4, dadurch gekennzeichnet, dass in Umfangsrichtung gesehen jedes dritte Füllstück (16) radial verkeilt ist.

6. Vorrichtung nach einem der Ansprüche 1 bis 5, dadurch gekennzeichnet, dass an den Füllstücken, denen Keile zugeordnet sind, Keile (17,18) paarweise radial innen und aussen angreifen.

7. Vorrichtung nach einem der Ansprüche 1 bis 5, dadurch gekennzeichnet, dass an den Füllstücken, denen Keile zugeordnet sind, jeweils nur eine Keil (17) angreift, der zwischen dem äusseren Ring (14) und dem besagten Füllstück (16) angeordnet ist.

8. Vorrichtung nach Anspruch 6 oder 7, dadurch gekennzeichnet, dass die wirksamen Keilflächen an der Innenseite des äusseren Ringes (14) und/oder der Aussenseite des inneren Ringes (15) und an den diesen Flächen zugewandten Flächen der Keile (17 und/oder 18) vorgesehen sind.

9. Vorrichtung nach Anspruch 6 oder 7, dadurch gekennzeichnet, dass die Keilflächen an den Füllstücken (16) und an den diesen zugewandten Fläche der Kelle (17) ausgebildet sind (Fig.5).

10. Vorrichtung nach Anspruch 8 oder 9, dadurch gekennzeichnet, dass zur Verspannung der Keile (17,17a,18) Schrauben- oder Stehbolzen (21,22,29;20a) vorgesehen sind, die sich über Platten (23;27) zumindest an einem der Ringe (14,15) abstützen.

11. Vorrichtung nach Anspruch 10, dadurch gekennzeichnet, dass die Schrauben- oder Stehbolzen über Federmittel, vorzugsweise Tellerfern (30) auf die Keile (17,17a,18) wirken.

## Claims

1. Apparatus for holding the winding ends (1, 2, 3, 4) of a stator winding in a dynamoelectrical machine, in which the winding ends have inner (2, 3) and outer layers (1, 4), which are mechanically and electrically connected to each other at the axially outer end, consisting of an outer ring (14) and an inner ring (15), means for connecting the two rings to each other, means (16, 17, 18) for bracing the two rings (14, 15) and said winding ends, filling pieces (16) being inserted between two neighbouring winding ends (1, 2) in the circumferential direction of the winding overhang, of which pieces at least some are braced in the radial direction with the two rings (14, 15), characterized in that means (9, 10, 11) for fastening the outer ring (14) to the end face of the stator laminated core are provided and in that at least some filling pieces (16) are wedged in the radial direction with the two rings (14, 15) by means of adjustable wedges (17, 18).

2. Apparatus according to Claim 1, characterized in that the outer ring (14) is fastened to cross members (11), which cross members (11) are arranged on a stator pressing plate (7).

3. Apparatus according to Claim 2, characterized in that the cross members (11) are arranged on the stator pressing plate (7) with radially directed leaf springs (9) inserted in between.

4. Apparatus according to one of Claims 1 to 3, characterized in that the filling pieces (16) have a trapezoidal, radially inwardly tapering cross section.

5. Apparatus according to one of Claims 1 to 4, characterized in that every third filling piece (16), seen in the circumferential direction, is radially wedged.

6. Apparatus according to one of Claims 1 to 5, characterized in that wedges (17, 18) act in pairs radially inward and outward on the filling pieces to which wedges are assigned.

7. Apparatus according to one of Claims 1 to 5, characterized in that only one wedge (17) acts in each case on the filling pieces to which wedges are assigned, which wedge is arranged between the outer ring (14) and said filling piece (16).

8. Apparatus according to Claim 6 or 7, characterized in that the effective wedge surfaces are provided on the inside of the outer ring (14) and/or on the outside of the inner ring (15) and on the surfaces of the wedges (17 and/or 18) facing the aforementioned surfaces.

9. Apparatus according to Claim 6 or 7, characterized in that the wedge surfaces are formed on the filling pieces (16) and on the surface of the wedges (17) facing the latter (Fig. 5).

10. Apparatus according to Claim 8 or 9, characterized in that screw bolts or stud bolts (21, 22, 29; 20a), which are supported at least on one of the rings (14, 15) via plates (23; 27), are provided for bracing the wedges (17, 17a, 18).

11. Apparatus according to Claim 10, characterized in that the screw bolts or stud bolts act via spring means, preferably disk springs (30), on the wedges (17, 17a, 18).

## Revendications

1. Dispositif pour maintenir les extrémités (1, 2, 3, 4) des spires d'un enroulement statorique dans une machine dynamoélectrique, dans laquelle les extrémités des spires présentent des couches internes (2, 3) et des couches externes (1, 4) qui sont mécaniquement et électriquement reliées l'une à l'autre dans l'extrémité située axialement à l'extérieur, se composant d'une bague extérieure (14) et d'une bague intérieure (15), de moyens pour relier les deux bagues l'une à l'autre, de moyens (16, 17, 18) pour attacher les deux bagues (14, 15) et lesdites extrémités de spires, dans lequel entre deux extrémités de spires voisines (1, 2) dans le sens périphérique des têtes de bobines, sont introduits des éléments de remplissage (16) dont au moins quelques-uns sont attachés aux deux bagues (14, 15) dans le sens radial, caractérisé en ce qu'il est prévu des moyens (9, 10, 11) pour la fixation de la bague extérieure (14) à la face frontale du corps de stator feuilleté et en ce qu'au moins quelques-uns des éléments de remplissage (16) sont calés aux deux bagues (14, 15) en direction radiale, au moyen de cales (17, 18) réglables.

2. Dispositif suivant la revendication 1, caractérisé en ce que la bague extérieure (14) est fixée à des traverses (11), traverses (11) qui sont montées sur une plaque de serrage du stator (7).

3. Dispositif suivant la revendication 2, caractérisé en ce que les traverses (11) sont montées sur la plaque de serrage du stator (7) avec interposition de lames de ressort (9) orientées radialement.

4. Dispositif suivant l'une ou l'autre des revendications 1 à 3, caractérisé en ce que les éléments de remplissage (16) présentent une section trapézoïdale se rétrécissant radialement vers l'intérieur.

5. Dispositif suivant l'une ou l'autre des revendications 1 à 4, caractérisé en ce que, vu dans le sens circonférentiel, un élément de remplissage (16) sur trois est calé radialement.

6. Dispositif suivant l'une ou l'autre des revendications 1 à 5, caractérisé en ce qu'aux éléments de remplissage auxquels sont couplées des cales, des cales (17, 18) sont appliquées par paires radialement vers l'intérieur et vers l'extérieur.

7. Dispositif suivant l'une ou l'autre des revendications 1 à 5, caractérisé en ce qu'aux éléments de remplissage, auxquels sont couplées des cales, n'est appliquée respectivement qu'une seule cale (17), qui est disposée entre la bague extérieure (14) et ledit élément de remplissage (16).

8. Dispositif suivant l'une ou l'autre des revendications 6 ou 7, caractérisé en ce que les faces de calage actives sont prévues sur le côté intérieur de la bague extérieure (14) et/ou sur le côté extérieur de la bague intérieure (15) et sur les faces des cales (17 respectivement 18) tournées vers ces faces.

9. Dispositif suivant l'une ou l'autre des revendications 6 ou 7, caractérisé en ce que les faces de calage sont ménagées sur les éléments de remplissage (16) et sur les faces des cales (17) tournées vers ces faces (Fig. 5).

10. Dispositif suivant l'une ou l'autre des revendications 8 ou 9, caractérisé en ce que, pour le serrage des cales (17, 17a, 18), il est prévu des boulons filetés ou des goujons filetés (21, 22, 29; 20a) qui prennent appui par des plaques (23; 27) au moins sur une des bagues (14, 15).

11. Dispositif suivant la revendication 10, caractérisé en ce que les boulons filetés ou les goujons filetés agissent sur les cales (17, 17a, 18) par des moyens formant ressort, de préférence des rondelles élastiques (30).
